# EUROPEAN PATENT SPECIFICATION

(11) **EP 3 536 167 B1**
(45) Date of publication and mention of the grant of the patent: **24.04.2024**
(21) Application number: 17868112.8
(22) Date of filing: 31.10.2017
(51) Int. Cl.: A23L 33/15, A23L 7/126, A23L 29/30, A23L 33/125, A23L 33/20, A23L 25/00, A23L 19/00

(54) **LOW-CALORIE CEREAL BAR COMPOSITION**
KALORIENARME GETREIDERIEGELZUSAMMENSETZUNG
COMPOSITION DE BARRE DE CÉRÉALES À FAIBLE TENEUR EN CALORIES

(30) Priority: 01.11.2016 KR 20160144717
(43) Date of publication of application: 11.09.2019
(73) Proprietor: Samyang Corporation, Seoul 03129 (KR)
(72) Inventor: KIM, Yong In, Yongin-si Gyeonggi-do 16868 (KR); KIM, Bong Chan, Seoul 01709 (KR); SEO, Il, Gwangju-si Gyeonggi-do 12784 (KR); LEE, Seung Mi, Hwaseong-si Gyeonggi-do 18477 (KR); LIM, Hye Jin, Seongnam-si Gyeonggi-do 13503 (KR); HAN, Tae-Chul, Yongin-si Gyeonggi-do 17081 (KR)
(74) Representative: Schrell, Andreas
(86) International application number: PCT/KR2017/012169
(87) International publication number: WO 2018/084535

(56) References cited:
- WO-A1-2012/052555
- WO-A1-2015/015209
- WO-A1-2015/094342
- KR-A- 20110 016 906
- KR-A- 20130 029 754
- KR-A- 20160 089 551
- US-A1- 2012 076 908
- Mutturi Sarma ET AL: "Modeling and Theoretical Analysis of Isomaltooligosaccharide (IMO) Production Using Fed-Batch Process" In: "Biotechnology and Biochemical Engineering", 1 January 2016 (2016-01-01), Springer Singapore, Singapore, XP093021819, ISBN: 978-981-1019-20-3 pages 73-74, Retrieved from the Internet: URL:http://link.springer.com/content/pdf/1 0.1007/978-981-10-1920-3.pdf>
- Soccol C.S.: "PREBIOTIC MILK PRODUCTS" In: "Fermentation Processes Engineering in the Food Industry", 1 January 2013 (2013-01-01), CRC Press, XP093021826, page 336,

## Description

### [TECHNICAL FIELD]

The present invention relates to a cereal bar composition comprising allulose and nuts, dried fruits and cereals. The cereal bar is lower calorie but a similar sweetness, and the excellent sensual satisfaction due to especially high moisture content, compared to a cereal bar prepared by sucrose and starch syrup

### [RELATED ART]

Sugar is mainly composed of sucrose and it is one of representative sweeteners that add sweetness. Sugar has excellent sweetness, and therefore it has been considered as the most preferable sweetener which is added to various foods and processed foods, etc. from the past and enhances the taste of food and increase the appetite. However, recently, as the harmfulness of sugar continues to be revealed, problems have been raised.

Specifically, excessive intake of sugar is pointed out as a major cause of various lifestyle diseases such as obesity and diabetes, etc. in addition to cavities, and thus the necessity of developing sweeteners which can replace it has emerged all over the world. In recent years, a variety of sweetener materials have been developed, but considering the degree of sweetness and quality of sweetness, sugar and these sweetener materials and various functional materials such as dietary fiber, etc. are mixed and commercialized.

In addition, the government is encouraging the implementation of "saccharide reduction" of food composition for the public health. According to the method of the instrumental analysis under Food Sanitation Act, "saccharides" refers to the sum of monosaccharides and disaccharides present in the food. Examples of monosaccharides include fructose and glucose, and disaccharides include sucrose, maltose and lactose. It is inevitable to substitute sucrose for achieving the above-mentioned reduction of saccharides in foods. Allulose which is used as a sweetener substituting the sucrose, is an epimer of third carbon number of fructose and a sweetness equivalent to 70% of fructose, and is a functional sugar that inhibits blood sugar regulation and fat synthesis in the liver, and prevents the tooth cavity. The sugar alcohols, which are widely used as sweeteners, have side effects such as diarrhea, when consumed over a certain amount. However, allulose has no known side effects and thus, there is a growing interest in allulose as a sweetener.

The cereal bar is a bar form containing a variety of raw materials such as cereal, and is widely used as a substitute for a meal in a recent westernized diet, particularly as a substitute for breakfast. However, the cereal bar has problems such as chewing sensation for use in a substitute for breakfast in empty stomach due to a hard texture

KR 2016 0089551 A discloses a snack bar composition containing allulose. It also discloses that allulose is provided in a crystalline form or a form of a syrup containing allulose and that allulose is 12-20 wt%.

### [DISCLOSURE]

### [TECHNICAL PROBLEM]

An object of the present invention is to provide a cereal bar composition comprising allulose, and having excellent savory properties due to high water content, and a similar sweetness but a low calorie value, by replacing some or all of the sucrose or starch syrup used in conventional cereal bars.

Another object not part of the present invention is to provide a method for preparing the cereal bar comprising allulose, nuts, dried fruits and cereals.

### [TECHNICAL SOLUTION]

The present invention provides a cereal bar composition comprising allulose, nuts, dried fruits and cereals. Also disclosed, but not as part of the invention is a process for preparing the cereal bar composition.
The present invention provides a cereal bar composition comprising allulose and having excellent savory properties due to high water content, and a similar sweetness but a low calorie value, compared to the conventional cereal bar prepared by sucrose or starch syrup.

The present invention provides a cereal bar composition comprising allulose, nuts, dried fruits and cereals.

The present invention discloses a cereal bar composition comprising allulose, nuts, dried fruit and cereals, wherein the composition comprise 3 to 20 wt% of allulose, 3 to 50 wt% of nuts, 2 to 40 wt % of dried fruit, and 3 to 50wt% of cereals, based on 100 wt% of the total composition, wherein the composition further comprise isomalto-oligosaccharide and starch syrup, and wherein the cereal bar composition has a moisture content of from 3 to 7 wt% and a water activity of 0.200 to 0.600, and a hardness of from 500 to 10,000 g.

In the cereal bar composition of the present invention, the allulose is prepared by mixing 3 to 20% by weight based on 100% by weight of the total composition. The allulose is contained in the above range, and the soft texture and sweetness being equivalent to what can be achieved using sucrose.

The cereal bar composition of the present invention may be characterized in that it contains 0.1 to 7 g, or preferably 1 to 5 g of a saccharide on the basis of 40 g of the cereal bar provided once. This means that the saccharide is reduced by 10 to 90%, or preferably by 30 to 80%, compared with the cereal bar composition prepared by only sucrose which is used in the same amount to provide the same or equivalent sweetness level. According to the method of the instrumental analysis under Food Sanitation Act, "saccharides" refers to the sum of monosaccharides and disaccharides present in the food. Examples of monosaccharides include fructose and glucose, and disaccharides may include sucrose, maltose and/or lactose.

In addition, according to the saccharide-reducing effect, the calorie based on the one serving amount of the cereal bar of 40g is reduced by 10 to 50% as compared with the cereal bar composition including only the sugar to impart the sweetness of the same level. The calories per one serving amount of the cereal bar may be 50 Kcal/40 g to 160 Kcal/40 g, or preferably 70 Kcal / 40 g to 150 Kcal / 40 g.

The cereal bar composition of the present invention may be prepared by further mixing at least one saccharide selected from the group consisting of sucrose, fructose, starch syrup, rare sugar and high-intensity sweetener.

The rare sugar includes various saccharides such as allose, tagatose, altrose and the like. The high-intensity sweetener is selected from the group consisting of aspartame, acesulfame K, sodium cyclamate, saccharin sodium, sucralose, stevia sweetener (steviol glycoside, enzyme treated stevia), dicin, thaumatins, neotame, rebaudioside A and monelin.

The additional saccharides may be mixed at 1 to 40% by weight, based on 100% by weight of the total composition to prepare the cereal bar. When the cereal bar composition is prepared by containing one or more additional saccharides, the saccharide syrup contain allulose and at least one of the additional saccharides and used for preparing the cereal bar composition. The additional saccharides may be at least one one selected from the group consisting of sucrose, fructose, starch syrup, rare sugar and high sweetness sweetener.

The allulose contained in the composition according to the present invention may be provided by allulose syrup, allulose power or allulose solution with various concentrations. Alluloses can be used alone or mixed saccharide containing glucose, fructose, and saccharides being disaccharides or higher degree of polymerization.

The allulose can be prepared by performing chemical synthesis, or a biological method using allulose epimerase, preferably, by a biological method, for example, by a microorganism or enzyme reaction. For example, the allulose is mixed saccharide or obtained therefrom, and the mixed saccharide may be mixed saccharide prepared by reacting a composition for producing allulose comprising one or more kinds selected from the group consisting of allulose epimerase, a microbial cell of a strain producing the epimerase, a culture of the strain, a lysate of the strain, and an extract of the lysate or culture with a fructose-containing raw material, or obtained therefrom.

The allulose may be used alone or in combination with other saccharides and the examples of mixed saccharides may contain from 1 to 99.9% by weight of allulose, based on 100% by weight of solid content in the total mixed saccharides, and may further include at least one selected from the group consisting of fructose, glucose, and oligosaccharides. Specific examples of the allulose-containing mixed saccharides include 2 to 55% by weight of allulose, 30 to 80% by weight of fructose, 2 to 60% by weight of glucose and 0 to 15% by weight of oligosaccharide, based on 100% by weight of solid content in the total mixed saccharides, but may not include the oligosaccharide. The above-mentioned allulose, fructose and glucose are preferably D-isomer.

The allulose syrup may be obtained through separation, purification and concentration processes from the allulose only or mixed saccharide. In one example of the present invention, the allulose syrup undergone the separation and purification processes may be allulose syrup which has an electrical conductivity of 1 to 50 µS/cm, and contains 10% by weight or more of allulose in the form of a colorless or light-yellow liquid having sweetness.

As one example for preparation of allulose of the present invention, an expression system which can produce allulose epimerase with high expression rate and stability, a GRAS (Generally recognized as safe) microorganism using the same, and a method of producing allulose containing a microorganism and enzyme using the expression system, etc. are described in detail in Korean Patents No. 10-1318422 and No. 10-1656063, etc.

The nuts, the dried fruits and the cereals included in the cereal bar composition of the present invention may be processed or unprocessed.

The nuts are at least one selected from the group consisting of peanuts, almonds, cashews, hazelnuts, walnuts, coconuts and pistachios, but not limited thereto. The nuts are comprised at an amount of 3 to 50 wt%, or preferably 5 to 30 wt% based on 100 wt% of total composition.

The cereal is at least one selected from the group consisting of rice, barley, brown rice, wheat, corn, rye, oats, sorghum bicolor, foxtail millet, common millet, buckwheat quinoa and spelt, but not limited thereto. The cereals are comprised in 3 to 50wt% or preferably 5 to 30 wt% based on 100 wt% of the total composition.

The dried fruits in the cereal bar composition can be at least one selected from the group consisting of cranberry, strawberry, prune, blueberry, blackberry, grape, apple, mango and banana, but not limited thereto. The dried fruits are comprised at an amount of 2 to 40 wt%, or preferably 3 to 20 wt% based on 100 wt% of the total composition.

The cereal bar composition of present invention may further comprises one or more seeds selected from the group consisting of chia seeds, linseed, perilla seed, sesame seed, poppy seed, and sunflower seeds, but not limited thereto. The seeds can be comprised of an amount of 2 to 40 wt%, or preferably 3 to 20 wt% based on 100 wt% of the total composition.

The cereal bar composition of the present invention may further comprises at least one component selected from the group consisting of an emulsifier, an indigestible dextrin, oligosaccharides, powdered skim milk, a protein powder, a vitamin, a mineral, yeast, gums, a salt, an expanding agent (sodium bicarbonate, Disodium Dihydrogen Pyrophosphate, etc.), flavoring agent, and coconut. The oligosaccharides can be at least one oligosaccharide selected from the group consisting of malto-oligosaccharide, galacto-oligosaccharide, fructo-oligosaccharide and soy oligosaccharide.

The moisture content of the cereal bar composition according to the present invention ranges from 3 to 7% by weight.
The water activity of the composition is from 0.200 to 0.600. In particular, the composition of the present invention has a low water activity but a high moisture content, and thus, is excellent in moisturizing power. The cereal bar composition can provide a soft and moist texture, and has a property of increasing stability due to microbial growth.

The moisture refers to the water content contained in the food, and the moisture in the food is always fluctuating according to the surrounding environmental conditions, and thus is expressed by the water activity considering the relative humidity in the atmosphere. The water activity is a very important feature in food, because it is associated with microbial growth and chemical, biological, or physical reactions in the food that alter the savory taste, color and flavor of the food. Therefore, the water activity has more significance in food stability than total moisture content. The vapor pressure of pure water to the vapor pressure of the food is the definition of water activity.

The water activity and food storage life are deeply related to microbial growth and chemical reaction rate. Microorganisms can no longer grow at the minimum water activity, and even if the number of microorganisms increases, the number of microorganisms is very small, so water activity is the most easily controllable too for microorganism. Depending on the type of microorganism, there is a considerable difference in sensitivity to water activity, and fungi and yeast are microorganisms that should pay attention to low water activity. Depending on the moisture or water activity in the food, it affects microbial alteration of food, enzyme activity and browning phenomenon, and in a certain range, these reactions tend to be proportional to water activity.

The hardness of the cereal bar composition of the present invention measured by a texture analyzer is 500 to 10,000 g. The cereal bar composition of the present invention can provide a smooth texture due to the hardness within the above range, thereby being particularly applied to as a substitute for a breakfast substitute, fasting state.

Another example, not part of the present invention provides a process for producing a cereal bar comprising allulose, nuts, dried fruits and cereals.

The matters relating to the cereal bar composition may be applied to the process of producing the cereal bar composition in the same manner.

For example, the production method, not part the present invention may further comprise a step of preparing a saccharide syrup solution by mixing allulose with at least one saccharide selected from the group consisting of sucrose, fructose, starch syrup, rare sugar and high-intensity sweeteners. For example, the syrup for cereal bars can be made by adding water to a mixture of starch syrup, sucrose, isomalto-oligosaccharide and allulose to prepare syrup, and heating it to concentrate the syrup to 82 brix.

The preparation method, not part of the present invention may further include one or more steps selected from the group consisting of a molding step, a cooling step and a cutting step, after preparing saccharide syrup solution and mixing with the nuts, the dried fruits and the cereals.

### [ADVANTAGEOUS EFFECTS]

The present invention relates to a cereal bar composition containing allulose and a method, not part of the invention, for preparing the same, which can be used as a substitute food for a healthful meal, because of low sugar content and low calorie. Especially, it has low water activity and high microbiological stability, so that a soft and moisty texture can be given, which can be very useful as a breakfast substitute.

### [MODE FOR INVENTION]

The present invention will be described in more detail by the following illustrative examples, but the scope of the present invention is not intended to be limited by the following examples.

### Preparative example 1. Preparation of allulose powder

As allulose, allulose syrup was prepared from fructose substrates by the substantially same biological method as the preparation method disclosed in Korean Patent No. 10-16173797.

Specifically, a gene (DPE gene; Gene bank: EDS06411.1) encoding allulose epimerase derived from *Clostridium scindens* (*Clostridium scindens* ATCC 35704) was introduced to a recombinant vector (pCES_sodCDPE), and with the prepared recombinant vector (pCES_sodCDPE) was transformed into *Corynebacterium glutamicum* by electroporation. The beads containing the transformed *Corynebacterium glutamicum* cells were prepared and filled in an immobilization reaction column, and the 24~26(w/w)% allulose syrup having a composition of glucose:fructose:allulose:oligosaccharide = 6:67:25:2 was obtained from 95 wt% of fructose at 40 Brix.

To remove impurities such as colored and ion components, etc., the obtained allulose syrup was treated by flowing through a column at a room temperature in which cation exchange resin, anion exchange resin and mixed resins of cation and anion exchange resins at a hourly rate of two times(1 to 2 times) of the volume as that of ion exchange resin. Then, using a chromatography filled with a calcium (Ca²⁺) type of ion exchange resin, allulose fraction with a high purity was obtained.

The high-purity allulose syrup was concentrated to 82 Bx and cooled slowly from a temperature of 35°C at which supersaturation occurred, to a temperature of 10 °C, produce alluose crystals. At this time, the allulose crystals obtained in the crystallization step without adding the allulose seed crystals were carried out by centrifugal dehydration to remove the mother crystals and the crystals were washed with cooling water, then dried and recovered.

### Examples 1 and 2. Preparation of cereal bars using allulose powder

### 1-1: Production of saccharide syrup

The preparation of the syrup for producing the cereal bar is carried out by weighing the raw material and adding an appropriate amount of water. The syrup was heated by using a water double boiler and the water in the syrup was evaporated to adjust the certain syrup brix (82bx), to prepare syrup for cereal bar production. A saccharide syrup solution was prepared by the components and contents shown in Table 1.

**[Table 1]**

| Raw material | Comparative Example 1 (% by weight) | Example 1 (% by weight) | Example 2 (% by weight) |
|---|---|---|---|
| Starch syrup (82bx) | 40 | 40 | 40 |
| Sucrose | 40 | 20 | - |
| Isomalto-oligosaccharide | 20 | 20 | 20 |
| Allulose powder | - | 20 | 40 |
| sum | 100 | 100 | 100 |

### 1-2: Preparation of cereal bars

The prepared saccharide syrup for cereal bar was mixed with the components and contents shown in Table 2 and heated in a pot for 25 minutes or more. The heating temperature was heated to 53 °C at the surface temperature of the pot and 60 °C at the pot temperature, followed by stirring to prepare a raw material mixture. The prepared raw material mixture was transferred through a conveyor belt, molded in a molding machine, and cooled to room temperature. After the cooling step, the product was cut to produce a serial bar. The unit of amount in Table 2 is % by weight.

**[Table 2]**

| Raw material | Comparative Example 1 | Example 1 | Example 2 |
|---|---|---|---|
| Cranberry | 10.54% | 10.54% | 10.54% |
| whole Almond | 7.63 | 7.63% | 7.63% |
| soy nugget | 7.27% | 7.27% | 7.27% |
| Rice crisp | 5.72% | 5.72% | 5.72% |
| Half-cut peanut | 5.00% | 5.00% | 5.00% |
| Prune dices | 4.90% | 4.90% | 4.90% |
| Baked brown rice | 4.54% | 4.54% | 4.54% |
| Isolated soy protein | 4.54% | 4.54% | 4.54% |
| Corn flake | 4.54% | 4.54% | 4.54% |
| Whole hazelnut | 2.82% | 2.82% | 2.82% |
| Blueberry extract | 2.72% | 2.72% | 2.72% |
| Non-digestible maltodextrin | 1.82% | 1.82% | 1.82% |
| Baked chia seed | 1.09% | 1.09% | 1.09% |
| Almond powder (12mesh or lower) | 0.91% | 0.91% | 0.91% |
| Vitamin and mineral mix SA | 0.91% | 0.91% | 0.91% |
| Extract of chicory root | 0.91% | 0.91% | 0.91% |
| Fish collagen | 0.91% | 0.91% | 0.91% |
| Arabic gum | 0.73% | 0.73% | 0.73% |
| Shell calcium | 0.45% | 0.45% | 0.45% |
| Purified salt | 0.18% | 0.18% | 0.18% |
| L-carnitine | 0.09% | 0.09% | 0.09% |
| Starch syrup (82bx) | 12.72% | 12.72% | 12.72% |
| Sucrose | 12.72% | 6.36% | - |
| Isomalto-oligosaccharide | 6.36% | 6.36% | 6.36% |
| Allulose powder | 0.00% | 6.36% | 12.72% |
| Sum | 100.00% | 100.00% | 100.00% |

### Comparative Example 1. Preparation of a serial bar

In Comparative Example 1, the cereal bar was performed as substantially the same as Example 1, except that 12.72% by weight of sucrose was used without including allulose, instead of 6.36% by weight of the sucrose and 6.35% by weight of the allulose powder used in Example 1.

### Test Example 1. Evaluation of water content and water activity

Moisture refers to the water content contained in the food, and the moisture in the food is always fluctuating according to the surrounding environmental conditions, and thus, the water activity considering the relative humidity in the atmosphere is represented. The water activity is a very important feature in food, because it is related to the chemical, biophysical, and physical reactions in foods that change microbial growth and taste, color and flavor of food.

The water content and water activity of the cereal bars prepared in Examples 1 and 2 and Comparative Example 1 were evaluated by the following methods. Water activity is an intrinsic property of food, and equilibrium relative humidity is an environmental property that equilibrates with food. The water content (%) in the cereal bar was measured by setting the temperature to 105 ° C. and the time to the automatic mode for 2 g of the sample with using a moisture analyzer (Satoriuns, Germany). The water activity was measured using a water activity meter (LG Electronics, Korea).

The water content and the water activity were measured at day 1, day 10, and day 15 after manufacture, and the measurement results are shown in Table 3 and FIG. 1 below.

**[Table 3]**

| Classification | | 1 day | 10 days | 15 days |
|---|---|---|---|---|
| Comparative Example 1 | Water content (%) | 5.61 | 5.58 | 3.66 |
| | Water activity (Aw) | 0.344 | 0.394 | 0.378 |
| Example 1 | Water content (%) | 5.08 | 5.52 | 4.13 |
| | Water activity (Aw) | 0.309 | 0.322 | 0.309 |
| Example 2 | Water content (%) | 5.37 | 5.64 | 4.19 |
| | Water activity (Aw) | 0.303 | 0.315 | 0.296 |

As described above, it was confirmed that as the content of allulose increases, the water content becomes higher but the water activity becomes lower. Generally, the soft texture is better as the moisture content is higher, but the higher moisture content also raises the water activity, which may cause microbial growth. However, in the cereal bar product of the present invention, the water content is increased but the water activity is not significantly different depending on the allulose content. Thus, the cereal bar achieved advantageously soft texture and stability to the microbial growth.

### Test Example 2: Evaluation of hardness (softness degree)

The hardness of the cereal bars prepared in Example 1, Example 2 and Comparative Example 1 in Preparation Example 2 was measured under the analytical conditions shown in Table 4, to evaluate the degree of soft texture. The hardness of the sample was measured with a texture analyzer (TA-XT2i, Stable micro system) under the following measurement conditions. The hardness was measured repetitively at five times and expressed as an average value.

The hardness of the cereal bar was evaluated by measuring the force applied at the time of pressing, and the degree of the hardness was represented by the weight (g) per unit area. The high value of hardness measured by the texture analyzer means higher force required for pressing the cereal bar, and means the cereal bar having harder texture. The conditions of measurement are shown in Table 4 below, and the measurement results are shown in Table 5.

**[Table 4]**

| Classification | Hardness analysis conditions | Measuring the pressing force |
|---|---|---|
| Sample Size | 30 W (mm) x 30 L (mm) x 30 H (mm) | Sample Size: Horizontal, Vertical, Height 30mm Cube Form |
| speed | 5mm/s | The speed at which the probe presses the sample is 5 mm / s |
| Distance | 30% | Press sample until 30% deformation at initial height of sample |
| Probe | 100mm compression plate | Probe kinds |

**[Table 5]**

| Sample | 1 day (g) | 10 days (g) | 15 days (g) |
|---|---|---|---|
| Comparative Example 1 | 4592.00 | 9290.00 | 11230.00 |
| Example 1 | 2877.00 | 4262.00 | 6530.00 |
| Example 2 | 906.00 | 2723.00 | 3320.00 |

As shown in Table 5, the hardness of the cereal bar prepared in Comparative Example 1 using only sucrose was the highest, and the hardness of the cereal bar in Example 2 having a high allulose content was further lower. Thus, the hardness was lowered according to the content of allulose, and the cereal bar containing allulose could be expected to have a relatively soft texture, due to the low hardness

### Test Example 3. Comparison of saccharide amount and Calorie

The total amount of monosaccharide and disaccharide in the 40 g of the cereal bars prepared in Example 1, Example 2 and Comparative Example 1 was measured according to the instrumental analysis method of Food Hygiene Act. The calorie of cereal bar was calculated by theoretical method using nutrients. The results are shown in Table 6 below.

**[Table 6]**

| Classification | Comparative Example 1 | Example 1 | Example 2 |
|---|---|---|---|
| Saccharides (g/40g) | 8 | 5 | 3 |
| Calorie(Kcal/40g) | 175 | 150 | 130 |

As can be seen from Table 6, it was confirmed that the cereal bars of Examples 1 and 2 had significantly lower saccharide content and superior calorie reduction effect as compared with Comparative Example.

### Test Example 4. Sensory Evaluation

In order to evaluate the sensory properties of the cereal bar such as crispness, sweetness, color intensity, appearance satisfaction and texture satisfaction of the cereal bars, the cereal bars prepared in Example 1, Example 2 and Comparative Example 1 were placed in the mouth, and stimulated the surface of oral cavity for 20 seconds. Then, the cereal bars were spit out. The mouth surface was washed with water every time after the evaluation of one sample was completed. After 10 minutes passed, the next sample was evaluated. The sensory elements were measured on a 5-point box scale, respectively. The sensory evaluation staff consisted of 15 panelists (20-40 years old, male and female) professionally trained on taste and flavor evaluations, and displayed on a 5-point scale. The evaluation criteria of the items are as follows, and the results are shown in Table 7 below.

The softness, the crispness, the sweetness, the appearance satisfaction and the texture satisfaction were rated as 0 for worst case and 5 for best case, respectively. The overall preference was set to a minimum of 0 points and a maximum of 5 points by judging overall appearance, texture, and taste.

**[Table 7]**

| Evaluation criteria | Comparative Example 1 | Example 1 | Example 2 |
|---|---|---|---|
| Soft feeling | 2.5 | 3.6 | 4.7 |
| Crispness | 3.3 | 3.7 | 3.7 |
| Sweetness | 4.0 | 4.2 | 3.8 |
| Color intensity | 3.5 | 3.6 | 3.4 |
| Appearance satisfaction | 3.7 | 3.6 | 3.9 |
| Texture satisfaction | 3.5 | 3.7 | 3.9 |
| Overall preference | 3.2 | 3.6 | 3.9 |

As shown in Table 7, the cereal bar containing allulose had the sweetness which was not significantly different from that of Comparative Example 1 containing a large amount of sucrose and starch syrup, and had notably high soft feeling being similar crispness to that of Comparative Example. It was confirmed that Example 2 in which the whole sucrose was replaced with allulose was the highest overall preference. Thus, it could be possible to provide a high-preference cereal bar having a low calorie and a soft texture.

## Claims

1. A cereal bar composition comprising allulose, nuts, dried fruit and cereals, wherein the composition comprise 3 to 20 wt% of allulose, 3 to 50 wt% of nuts, 2 to 40 wt% of dried fruit, and 3 to 50wt% of cereals, based on 100 wt% of the total composition,
wherein the composition further comprise isomalto-oligosaccharide and starch syrup, and
wherein the cereal bar composition has a moisture content of from 3 to 7 wt% and a water activity of 0.200 to 0.600, and a hardness of from 500 to 10,000 g.

2. The cereal bar composition of claim 1, wherein the allulose is an allulose powder or allulose syrup form.

3. The cereal bar composition of any one of claims 1 to 2, wherein the allulose is provide with a mixed saccharide syrup or powder form prepared by the mixed saccharide syrup, and the mixed saccharide syrup comprises 1 to 99.9 wt% of allulose based on 100 wt% of total solid content of the mixed saccharide, and further comprises at least one selected from the group consisting of fructose, glucose and oligosaccharides.

4. The cereal bar composition of claim 3, wherein the mixed saccharide comprises 2 to 55 wt% of allulose, 30 to 80 wt% of fructose and 2 to 60 wt% of glucose, based on 100 wt% of total solid content of the mixed saccharide.

5. The cereal bar composition of claim 3, wherein the mixed saccharide is prepared by reacting a fructose-containing raw material with a composition for producing allulose comprising one or more selected from the group consisting of an allulose epimerase, a microbial cell of a strain producing the allulose epimerase, a culture of the strain, a lysate of the strain, and an extract of the lysate or the culture.

6. The cereal bar composition of any one of claims 1 to 5, wherein the composition further comprises at least one saccharide selected from the group consisting of sucrose, fructose, rare sugar and high-intensity sweetener.

7. The cereal bar composition of any one of claims 1 to 6, wherein the nuts are at least one selected from the group consisting of peanuts, almonds, cashews, hazelnuts, walnuts, coconuts and pistachios.

8. The cereal bar composition of any one of claims 1 to 7, wherein the cereal is at least one selected from the group consisting of rice, barley, brown rice, wheat, corn, rye, oats, sorghum bicolor, foxtail millet, common millet, buckwheat quinoa and spelt.

9. The cereal bar composition of any one of claims 1 to 8, wherein the dried fruit is at least one selected from the group consisting of cranberry, strawberry, prune, blueberry, blackberry, grape, apple, mango and banana.

10. The cereal bar composition of any one of claims 1 to 9, wherein the composition further comprises one or more seeds selected from the group consisting of chia seeds, linseed, perilla seed, sesame seed, poppy seed, and sunflower seeds.

11. The cereal bar composition of any one of claims 1 to 10, wherein the cereal bar composition comprises 0.1 to 7 g of saccharide based on 40 g of cereal bar composition.

## Patentansprüche

1. Zerealienriegelzusammensetzung, umfassend Allulose, Nüsse, getrocknete Frucht und Zerealien, wobei die Zusammensetzung 3 bis 20 Gew.-% Allulose, 3 bis 50 Gew.- % Nüsse, 2 bis 40 Gew.-% getrocknete Frucht und 3 bis 50 Gew.-% Zerealien, bezogen auf 100 Gew.-% der Gesamtzusammensetzung, umfasst, wobei die Zusammensetzung ferner Isomalto-Oligosaccharid und Stärkesirup aufweist, und wobei die Zerealienriegelzusammensetzung einen Feuchtigkeitsgehalt von 3 bis 7 Gew.-% und eine Wasseraktivität von 0,200 bis 0,600, und eine Härte von 500 bis 10.000 g aufweist.

2. Zerealienriegelzusammensetzung nach Anspruch 1, wobei die Allulose ein Allulosepulver oder eine Allulosesirupform ist.

3. Zerealienriegelzusammensetzung nach einem der Ansprüche 1 bis 2, wobei die Allulose mit einem gemischten Saccharidsirup oder in Pulverform bereitgestellt wird, das durch den gemischten Saccharidsirup hergestellt wird, und der gemischte Saccharidsirup 1 bis 99,9 Gew.-% Allulose, bezogen auf 100 Gew.-% des Gesamtfeststoffgehalts des gemischten Saccharids, umfasst, und ferner mindestens eines, ausgewählt aus der Gruppe bestehend aus Fructose, Glucose und Oligosacchariden, umfasst.

4. Zerealienriegelzusammensetzung nach Anspruch 3, wobei das gemischte Saccharid 2 bis 55 Gew.-% Allulose, 30 bis 80 Gew.-% Fructose und 2 bis 60 Gew.-% Glucose umfasst, bezogen auf 100 Gew.-% des Gesamtfeststoffgehalts des gemischten Saccharids.

5. Zerealienriegelzusammensetzung nach Anspruch 3, wobei das gemischte Saccharid durch Umsetzen eines Fructose-enthaltenden Rohmaterials mit einer Zusammensetzung zur Herstellung von Allulose hergestellt wird, die eine oder mehrere ausgewählt aus der Gruppe bestehend aus einer Allulose-Epimerase, einer mikrobiellen Zelle eines Stammes, der die Allulose-Epimerase produziert, einer Kultur des Stammes, einem Lysat des Stammes und einem Extrakt aus dem Lysat oder der Kultur umfasst.

6. Zerealienriegelzusammensetzung nach einem der Ansprüche 1 bis 5, wobei die Zusammensetzung ferner mindestens ein Saccharid ausgewählt aus der Gruppe bestehend aus Saccharose, Fructose, seltenem Zucker und hochintensivem Süßstoff umfasst.

7. Zerealienriegelzusammensetzung nach einem der Ansprüche 1 bis 6, wobei die Nüsse mindestens welche ausgewählt aus der Gruppe bestehend aus Erdnüssen, Mandeln, Cashews, Haselnüssen, Walnüssen, Kokosnüssen und Pistazien sind.

8. Zerealienriegelzusammensetzung nach einem der Ansprüche 1 bis 7, wobei die Zerealie mindestens eine ausgewählt aus der Gruppe bestehend aus Reis, Gerste, braunem Reis, Weizen, Mais, Roggen, Hafer, Sorghum bicolor, Fuchsschwanzhirse, gewöhnlicher Hirse, Buchweizen, Quinoa und Dinkel ist.

9. Zerealienriegelzusammensetzung nach einem der Ansprüche 1 bis 8, wobei die getrocknete Frucht mindestens eine ausgewählt aus der Gruppe bestehend aus Cranberry, Erdbeere, Pflaume, Heidelbeere, Brombeere, Traube, Apfel, Mango und Banane ist.

10. Zerealienriegelzusammensetzung nach einem der Ansprüche 1 bis 9, wobei die Zusammensetzung ferner einen oder mehrere Samen ausgewählt aus der Gruppe, bestehend aus Chiasamen, Leinsamen, Perillasamen, Sesamsamen, Mohnsamen und Sonnenblumenkernen umfasst.

11. Zerealienriegelzusammensetzung nach einem der Ansprüche 1 bis 10, wobei die Zerealienriegelzusammensetzung 0,1 bis 7 g Saccharid, bezogen auf 40 g Zerealienriegelzusammensetzung, umfasst.

## Revendications

1. Une composition de barre de céréale comprenant de l'allulose, des noix, du fruit séché et des céréales, dans laquelle la composition comprend de 3 à 20 % en poids d'allulose, de 3 à 50 % en poids de noix, de 2 à 40 % en poids de fruit séché, et de 3 à 50 % en poids de céréales, sur la base de 100 % en poids de la composition totale, dans laquelle la composition comprend en outre de l'isomalto-oligosaccharide et du sirop d'amidon, et dans laquelle la composition de barre de céréale a une teneur en humidité de 3 à 7 % en poids et une activité de l'eau de 0,200 à 0,600, et une dureté de 500 à 10 000 g.

2. La composition de barre de céréale de la revendication 1, dans laquelle l'allulose est une poudre d'allulose ou une forme de sirop d'allulose.

3. La composition de barre de céréale de l'une quelconque des revendications 1 à 2, dans laquelle l'allulose est fournie avec un sirop de saccharide mixte ou une forme de poudre préparée par le sirop de saccharide mixte, et le sirop de saccharide mixte comprend de 1 à 99,9 % en poids d'allulose sur la base de 100 % en poids du contenu solide total du saccharide mixte, et comprend en outre au moins un élément choisi dans le groupe constitué par le fructose, le glucose et les oligosaccharides.

4. La composition de barre de céréale de la revendication 3, dans laquelle le saccharide mixte comprend 2 à 55 % en poids d'allulose, 30 à 80 % en poids de fructose et 2 à 60 % en poids de glucose, sur la base de 100 % en poids du contenu solide total du saccharide mixte.

5. La composition de barre de céréale de la revendication 3, dans laquelle le saccharide mixte est préparé en faisant réagir une matière première contenant du fructose avec une composition pour la production d'allulose comprenant un ou plusieurs choisis dans le groupe constitué d'une épimérase d'allulose, d'une cellule microbienne d'une souche produisant l'épimérase d'allulose, d'une culture de la souche, d'un lysat de la souche, et d'un extrait du lysat ou de la culture.

6. La composition de barre de céréale de l'une quelconque des revendications 1 à 5, dans laquelle la composition comprend en outre au moins un saccharide choisi dans le groupe constitué par le saccharose, le fructose, le sucre rare et l'édulcorant de haute intensité.

7. La composition de barre de céréale de l'une quelconque des revendications 1 à 6, dans laquelle les noix sont au moins une choisie dans le groupe constitué par les cacahuètes, les amandes, les noix de cajou, les noisettes, les noix, les noix de coco et les pistaches.

8. La composition de barre de céréale de l'une des revendications 1 à 7, dans laquelle la céréale est au moins une choisie dans le groupe constitué par le riz, l'orge, le riz brun, le blé, le maïs, le seigle, l'avoine, le sorgho bicolore, le millet à queue de renard, le millet commun, le sarrasin, le quinoa et l'épeautre.

9. La composition de barre de céréale de l'une quelconque des revendications 1 à 8, dans laquelle le fruit séché est au moins un choisi dans le groupe constitué de la canneberge, de la fraise, du pruneau, de la myrtille, de la mûre, du raisin, de la pomme, de la mangue et de la banane.

10. La composition de barre de céréale de l'une des revendications 1 à 9, dans laquelle la composition comprend en outre un ou plusieurs graines choisies dans le groupe constitué par les graines de chia, les graines de lin, les graines de périlla, les graines de sésame, les graines de pavot et les graines de tournesol.

11. La composition de barre de céréale de l'une des revendications 1 à 10, dans laquelle la composition de barre de céréale comprend 0,1 à 7 g de saccharide sur la base de 40 g de composition de barre de céréale.
